# EUROPEAN PATENT SPECIFICATION

(11) **EP 0 731 942 B1**
(45) Date of publication and mention of the grant of the patent: **30.09.1998**
(21) Application number: 94923897.6
(22) Date of filing: 21.06.1994
(51) Int. Cl.: G06F 9/445

(54) **METHODS AND APPARATUS FOR CREATING AND MANAGING DYNAMIC PROPERTY SHEETS**
VERFAHREN UND VORRICHTUNG ZUR ERZEUGUNG UND VERWALTUNG DYNAMISCHER EIGENSCHAFTSBLÄTTER
PROCEDES ET APPAREIL POUR CREER ET GERER DES FEUILLES DYNAMIQUES DE PROPRIETES

(30) Priority: 29.11.1993 US 159007
(43) Date of publication of application: 18.09.1996
(73) Proprietor: WANG LABORATORIES, INC., Billerica, MA 01821-4130 (US)
(72) Inventor: BOWMAN, David, M., Hollis, NH 03049 (US); GANSZ, Dolerita, J., Stow, MA 01775 (US)
(74) Representative: Behrens, Dieter, Dr.-Ing.
(86) International application number: US9407035
(87) International publication number: WO9514969

(56) References cited:
- EP-A- 0 398 644

## Description

### FIELD OF THE INVENTION:

This invention relates generally to digital data processors and, in particular, to digital data processors that maintain a record of properties or attributes associated with objects, such as files.

### BACKGROUND OF THE INVENTION:

Several known types of digital data processing systems employ a data structure, referred to herein as a Property Sheet, to maintain a record of settings, properties or attributes that are associated with objects. However, in those implementations that are known to the inventors these Property Sheets are static, as opposed to dynamic, structures. That is, once defined the properties of an object remain relatively constant, are not readily changed by a user of the system, and may not be exported for use in defining or modifying the properties of another object of a same, similar, or different class of objects. Known types of conventional implementations also have restrictions on user-visible behavior, and on inconsistencies between device/directory/file objects and nonfile based objects.

EP-A-0 398 644 (IBM) discloses a technique for aiding in the initialization of a data processing system. System entities are said to be logical, pseudo, or real. The system and method of D1 is said to dynamically define, configure, start, stop, undefine and unconfigure "the objects representing the physical and logical entities within a data processing system" (col. 7, lines 5-9).

### OBJECTS OF THE INVENTION:

It is therefore one objective of this invention to provide a dynamic Property Sheet for defining the properties or attributes of an object.

It is another objective of this invention to provide a dynamic Property Sheet having a list of Properties and a list of Methods that are associated with an object.

It is a further objective of this invention to provide a method of using a dynamic Property Sheet that is associated with a first object to modify the properties of a second object.

It is another objective of this invention to provide a method of using a dynamic Property Sheet that is associated with a first object associated with a first base class or sub-class to modify the properties of a second object associated with a second base class or sub-class.

It is another objective of this invention to provide a method of using a dynamic Property Sheet that is associated with an object associated with a first base class or sub-class to establish an initial set of properties for another, user-defined, base class or sub-class.

It is one further objective of this invention to provide a dynamic Property Sheet that overcomes the deficiencies found in conventional lists of settings for an object, and that enables a user of a data processing system, or an administrator of the system, to add new attributes and/or to redefine and modify object definitions.

### SUMMARY OF THE INVENTION

The foregoing and other problems are overcome and the objects of the invention are realized by a method as defined in claim 1, said method for operating a digital data processing system for modifying the characteristics of an object, such as an application program (applet), or a data file, that is selected from a base class of objects. The method includes a first step of, in response to an input signal, accessing within a storage device a data structure that is associated with the object. The data structure is referred to herein as a dynamic Property Sheet, and is capable of storing a Property list having at least one entry that is descriptive of at least one property of the base class. The data structure is further capable of storing a Method list having at least one entry that is descriptive of at least one method that is available to the base class. A next step modifies the data structure to add, modify, or delete at least one entry. A next step stores the modified data structure within the storage device so that when the object is subsequently invoked for use, the object is utilized in accordance with the modified data structure.

Each entry of the Property list includes, but is not limited to, at least one Name field that identifies the Property specified by the entry; a Property Value field; a Type field that identifies a type of the Property Value; a field for specifying a Maximum Size of the Property Value; a State field for indicating if the Property list entry is included or removed from the data structure; and a field for specifying a User Interface control function.

Each entry of the Method list includes, but is not limited to, at least one Name field that identifies the Method specified by the entry; a State field for indicating if the Method list entry is included or removed from the data structure; and a Procedure Name field for identifying a program that is executed to accomplish the Method identified by the entry.

The data structure can further include a Name field; a Base Class name field; and a Sub-Class name field.

The method includes a step of merging the data structure with a second data structure associated with the same or another object. This step of merging includes the steps of: for an entry within the Property list of the data structure that does not have a corresponding entry with the same Name field within the Property list of the second data structure, adding the entry to the Property list of the second data structure; and for an entry within the Property list of the data structure that does have a corresponding entry with the same Name field within the Property list of the second data structure, and for which the State field indicates that the entry is removed from the Property list of the data structure, setting the State field of the corresponding entry of the Property list of the second data structure to indicate that the corresponding entry is removed from the Property list of the second data structure.

The step of merging the data structure with a second data structure associated with the same or another object can also include the steps of: for an entry within the Method list of the data structure that does not have a corresponding entry with the same Name field within the Method list of the second data structure, adding the entry to the Method list of the second data structure; and for an entry within the Method list of the data structure that does have a corresponding entry with the same Name field within the Method list of the second data structure, and for which the State field indicates that the entry is removed from the Method list of the data structure, setting the State field of the corresponding entry of the Method list of the second data structure to indicate that the corresponding entry is removed from the Method list of the second data structure.

The method further includes the steps of (a) copying the data structure as a second data structure; and (b) modifying the Base Class name field to establish a new Base Class having characteristics specified by the second data structure, and/or modifying the Base Sub-Class name field to establish a new Base Sub-Class having characteristics specified by the second data structure.

The methods of the invention are available to an administrator of the system, and selectively to a user of the system. Access top the methods of the invention can be by a user interface having a graphical display screen and a pointing device, or by commands and programs inputted from, by example, a network administrator.

A data processing system for implementing the method is defined in claim 11.

### BRIEF DESCRIPTION OF THE DRAWINGS

The above set forth and other features of the invention are made more apparent in the ensuing Detailed Description of the Invention when read in conjunction with the attached Drawings, wherein:
FIG. 1 is a block diagram of a data processing system that is constructed and operated in accordance with this invention;
FIGs 2A-2C illustrate an inheritance hierarchy that depicts the classes and sub-classes associated with a Class of Object (CCopObject or CCopObj), and which shows the relative position of the class of Property Sheet within the hierarchy;
FIG. 3 depicts an exemplary sequence of user interactions with a dynamic Property Sheet; and
FIG. 4 depicts an exemplary sequence of system administrator interactions with a dynamic Property Sheet.

### DETAILED DESCRIPTION OF THE INVENTION

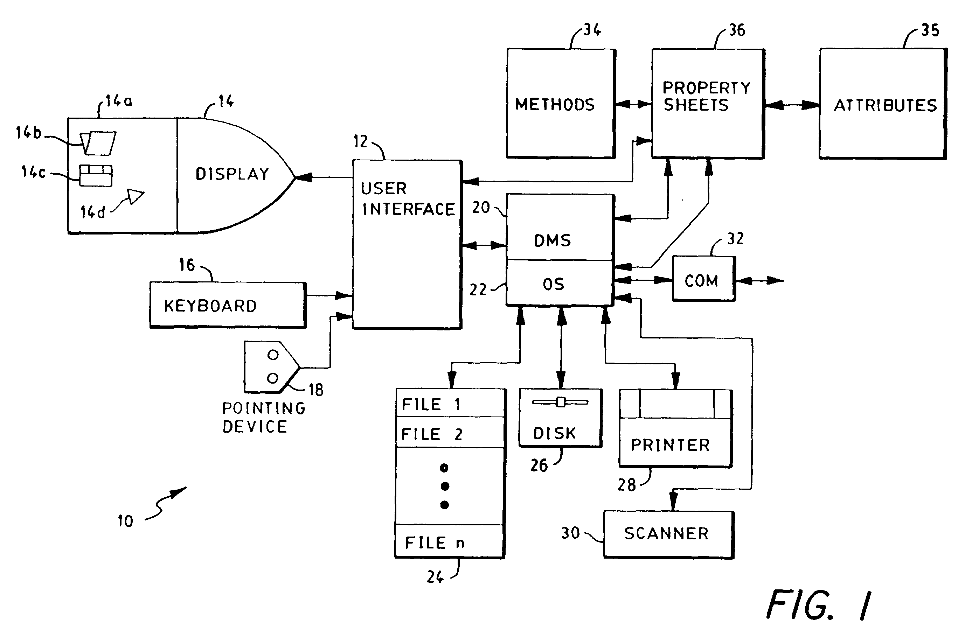

Reference is made to FIG. 1 which illustrates a data processing system 10 that is constructed and operated in accordance with an embodiment of this invention. In this embodiment, a user of the system 10 is enabled to access and interact with a dynamic Property Sheet through the use of a graphical display device, a pointing device, such as a mouse, and a standard keyboard. However, and as will described below, the teaching of the invention applies as well to systems that do not provide a graphical user interface or environment.

More particularly, a user interface 12 is coupled to a graphical display 14, a keyboard 16, and a pointing device 18 for displaying information to, and receiving input from, a user of the system. The display 14 has a display screen 14a on which are displayed text and also graphical images, referred to herein as icons 14b and 14c, and a cursor 14d. The pointing device 18 may be a mouse, trackball, pen, or any suitable real or emulated device that is capable of providing position data, referenced to the display screen 14a, to the user interface 12. Bidirectionally connected to the user interface 12 is a document management system (DMS) 20 that works in cooperation with an operating system (OS) 22. The DMS 20 is also referred to herein by the acronym "Cop".

The system 10 includes a plurality of data structures, also referred to herein as objects, which may include files (FILE_1-FILE_n) stored within a file storage memory 24, a disk 26, a printer 28, a document scanner 30, and a communications port (COM) 32. The OS 22 includes, in a conventional manner, low-level drivers that are used for (a) controlling the creation, storage, and retrieval of the FILES; and (b) operating the disk 26, printer 28, scanner 30, and COM 32 devices.

In general, an object may be a folder, document, image, part of a data base, a user-defined data structure, etc. of the driver and interface software that is required to operate a physical device.

Bidirectionally coupled to the DMS 20, the user interface 12, and the OS 22 is a block 36 which stores and manages the operation of a plurality of data structures referred to herein as "dynamic Property Sheets". Bidirectionally coupled to the block 36 is a memory 34 which stores a plurality of Methods, and a memory 35 which stores a plurality of Attributes. in accordance with an aspect of this invention, the Property Sheets have dynamic, as opposed to static, characteristics and are user-definable and user-modifiable through, for example, the user interface 12.

In general, a dynamic Property Sheet stores at least one Method that is associated with the object from which it is derived properties). Typically, a dynamic Property Sheet will include a list of Attributes and a list of Methods that are associated with an object. Once created, the Attributes and Methods can be changed by the user by, for example, using a mouse pointing device 18 to double click on a displayed instance of the Property Sheet. User defined attributes may be added if the class with which the Property Sheet is associated supports user defined attributes. The Methods of the dynamic Property Sheet are stored within the memory 34, and are those Methods that are available for the source object. For example, all printer document Methods on an object source instance are a component of the printer document Property Sheet method definitions. The user may add, delete, or modify a Method with a user-defined script, an executable program, or a registry method. Using the pointing device 18, in conjunction with the icons displayed on the display screen 14a, a Property Sheet can be "dropped" onto an instance of a 'like' object, (i.e. printer document, if derived from a printer document) to set the properties of that object for future use, or dropped on a data object, such as a document, thereby associating a set of properties relating to printing, faxing, etc. with the document. These properties are subsequently used when the data object is dropped onto the printer, fax, etc. As such, it may be useful to consider a dynamic Property Sheet as a set of object properties (attributes) and methods for which one may prompt a user.
The Attributes of the dynamic Property Sheet are stored within the memory 35.

In general, a class definition for an object can be obtained, and a dynamic Property Sheet object can be constructed from the class definition. By modifying the object class name, the dynamic Property Sheet can then be used to form a class definition for a new object.

A dynamic Property Sheet can be dropped on an object of 'like type' (i.e., a 'document' property sheet dropped on a 'document'). This has the same effect as selectively changing the attributes and methods associated with the object. This is accomplished by the block 36 selectively filtering the attributes and methods, as described below.

A dynamic Property Sheet can also be dropped on an object of 'unlike type' (i.e., a 'printer' property sheet dropped on a 'document'). In this case the attributes and methods of the document are not affected. However, the printer dynamic Property Sheet is subsequently used to drive the functionality of a like object. For example, an instance of the 'document' is eventually dropped onto a printer for printing. The attributes and methods associated with the printer dynamic Property Sheet are then used to overide the printer object default settings.

In general, one dynamic Property Sheet of given class can be attached to an object. For example, one document dynamic Property Sheet can be attached to a document object.

In accordance with this invention, and as will be described in further detail below, the user or the administrator of the system 10 has an ability to dynamically modify the Property Sheets (hence the term "dynamic Property Sheet"). This overcomes the limitations of known types of conventional approaches which, in general, enable a user to only change a content of a list of properties or settings, but not add or delete properties or settings. For example, one known conventional approach enables a user to change a title associated with a list of attributes or settings, or to change the characteristics of predetermined settings, but not to delete settings from, or add settings to, the list associated with a given object.

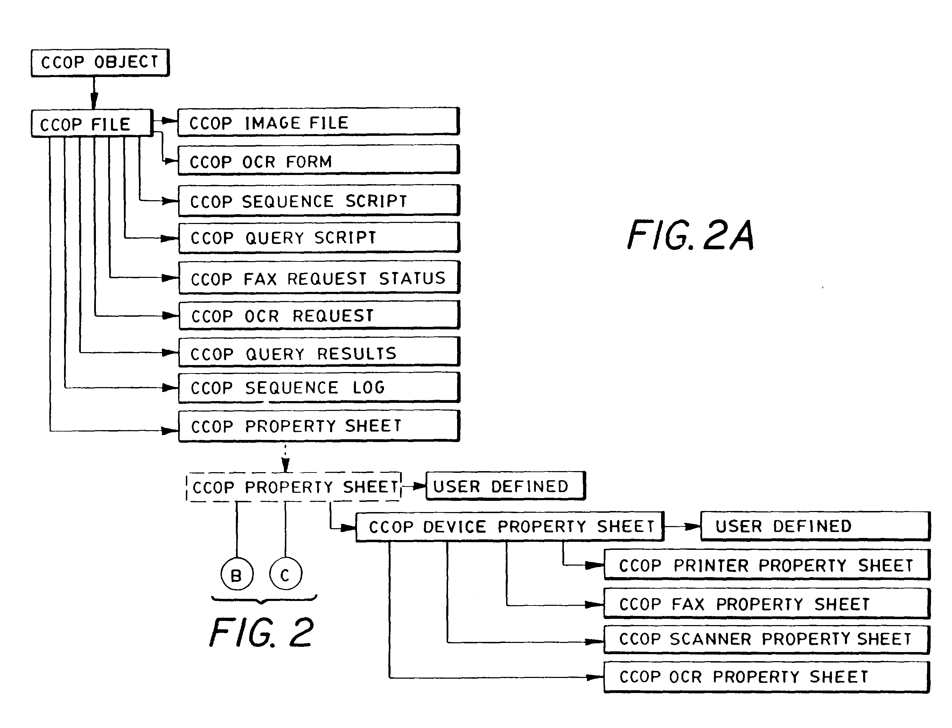

Reference is made to FIGs. 2A-2C which illustrate a hierarchy of classes that can be associated with a single Class of Cop Object (CCopObj). The arrow connecting the Classes indicates that the lower level Class inherits from the higher level Class. CCopObj is a base class from which any of the aforementioned objects described above in FIG. 1 may be derived, and can also include, by example, image and text documents, a folder, Optical Character Recognition (OCR) results obtained from the scanner 30, a catalog of documents, and user-defined objects.

A next lower level is the Class Cop (or DMS) FILE (CCopFile) which in turn can be associated with a number of sub-classes, including the Class Cop Property Sheet (CCopPropertySheet) which is of particular interest to the description of this invention. The other sub-classes of CCopFile are shown in FIG. 2A for completeness, and are not germane to an understanding of this invention.

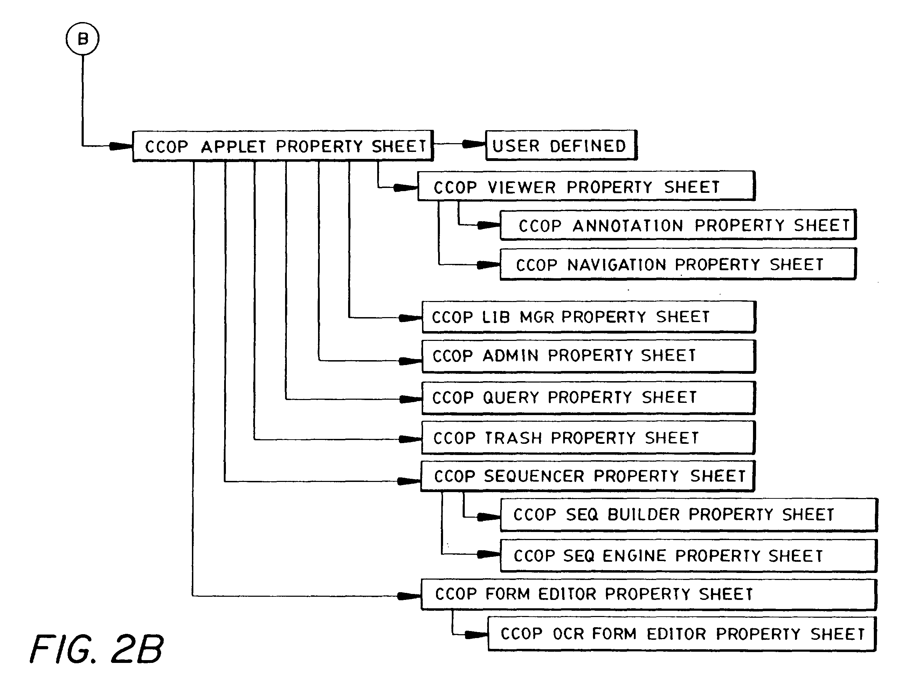

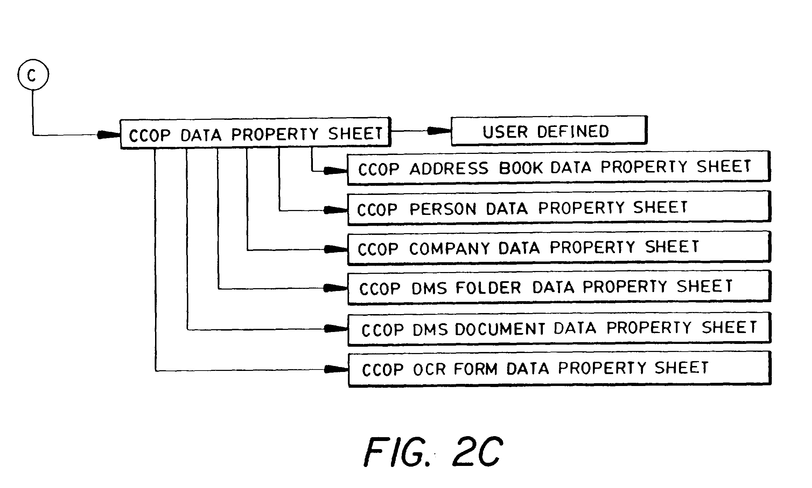

The CCopPropertySheet has four sub-classes associated therewith: User Defined; CCopDevicePropertySheet; CCopAppletPropertySheet (FIG. 2B); and CCopDataPropertySheet (FIG. 2C). As employed herein, an "Applet" is considered to be a small application program that is employed by the Cop DMS 20 during its operation. Each of these sub-classes can give rise to a number of defined sub-classes, as is illustrated in FIGS. 2A-2C. For example, the CCopDevicePropertySheet has the sub-classes of User Defined, Printer, Fax, Scanner, and OCR.

In general, the dynamic Property Sheet of this invention has the following characteristics:
(a) support of user definable classes and sub-classes (principally in a desktop and a server environment), including the addition and subtraction of Methods and Properties (Attributes) from an existing object class/sub-class;
(b) an ability to alter a user-visible presentation of properties and methods so as to enhance the useability and utility of the objects themselves; and
(c) an ability to create intelligent objects (Smart Objects™), such as folders, documents, forms, etc., that are capable of autonomously performing work processes from simple operations, such as store, mail, or fax the objects themselves, routing within a group, routing across multiple system environments, "trash" that knows how and when to empty itself, person/group objects that know the 'rules' for processing work requests and documents or forms, folders that know when their contents are complete and how to subsequently process themselves, and any user-defined process.

The dynamic Property Sheet of the invention further provides:
(d) an ability for users to define and store, either graphically or programically, their own object classes/methods with little or no programming;
(e) a framework for users to develop scripts, programs, dynamic subroutine libraries, object registry methods, or other procedural logic to add Methods to an object class; and
(f) support for dynamically defined object properties at both the class and object instance level.

The dynamic Property Sheet of the invention further provides:
(g) an ability to function as a means of proceduralizing object level operations by parameterization through a Property Sheet (i.e. proceduralizing operations such as setting printer defaults through an object Property Sheet);
(h) a consistent user interface for Property Sheets (dynamic or static) for both devices, directories, and file and non-file based objects (stored in an object repository DMS); and
(i) a method of dynamically defining object classes by means of an extended user interface drag and drop metaphor (drag in conjunction with a user specified character sequence).

In the system 10 applets and workspace objects have both static base properties and an ability to support dynamic Property Sheets. All dynamic Property Sheets are derived from base classes, as depicted in FIGs. 2A-2c. A MakePropertySheet Method, described below, is supported by all of the base classes, by Cop (Document Management) classes, and by other device and administrative classes. A dynamic Property Sheet may not be derived from another dynamic Property Sheet (although it may be copied from another dynamic Property Sheet), but can be derived from an object that already has a Property Sheet of 'like' class associated therewith. A dynamic Property Sheet may be derived from an object which already has a dynamic Property Sheet associated therewith, and which then alters the base class definition.

For example, an instance of a folder class may not have a Property Sheet, but instead has a set of base class properties, some of which may already be initialized. A folder dynamic Property Sheet is created from the object instance (or from the folder class definition itself if a system administrator allows visibility to the storage of class definitions), and the visibility and user interface attributes, contents, and presentation of the object's properties (attributes and methods) is altered to fit a user's specific requirements. The dynamic Property Sheet is then dropped back onto the folder instance, or otherwise associated therewith, causing the DMS 20 to alter the folder's base properties by "filtering" same and overriding (replacing) those base properties that are specified by the dynamic Property Sheet. As a result, the user may subsequently observe that the base properties of the folder instance have different contents, presentation, and availability of methods.

That is, the folder object instance now has a Property Sheet associated with it which effectively alters the user's view of the class definition. Furthermore, by changing the sub-class name attribute (described below) to be different from what it was before, e.g. 'Folder' to 'Insurance Claim Folder', the user defines a new Cop sub-class within the hierarchy depicted in FIGs. 2A-2C. If the user then subsequently creates a dynamic Property Sheet from the 'Insurance Claim Folder' object, the new dynamic Property sheet includes the properties of the source Property Sheet merged with those that may be part of the object's base Property set. If a copy of the object is made, the contents of the associated Property Sheet is copied with the new object instance.

Storage of dynamic Property Sheets is as the 'Property Sheet' subclass of 'File Objects', with an entry in the object repository (Cop DMS 20 or other DMS if appropriate). The Property Sheet object content is stored as a serialized file. All floating and DMS-stored objects support Property Sheets as a subclass of 'Attachments' to the object. Multiple Property Sheets may be associated with a single object. Property Sheets may be deleted from an object in the same way any other attachment may be deleted.

Property Sheets may be dropped on address book entries and on administrative directory and administrative entries. For example, user or group administrative directory entries may have Property Sheets associated with them which specify the user defaults.

Each dynamic Property Sheet is embodied as a data structure that is stored within the block 36 of FIG. 1. The Property Sheet data structure is comprised of a plurality of fields, in a presently preferred embodiment of this invention, as follows.

| Class Definition: DynamicPropertySheet | |
|---|---|
| DATA FIELD | DESCRIPTION |
| Name | Name of the Property Sheet/blank if untitled |
| | |
| Prop. Sheet Base Class | Name of the base object from which this Property Sheet was derived (i.e. printer folder, etc., initially derived from the source object's base class) |
| | |
| Prop. Sheet User Subclass | User/administrator's Name of the Subclass of this Property Sheet |
| | |
| Property List | List of Entries of a set of properties (attributes) of the source class that this Property Sheet is derived from. |
| | |
| Entry: | Each Entry in the list includes: |
| Internal name or ID | Identifies the Property or attribute; |
| External name | Name (keyword) shown to user for Property (i.e. baud rate); |
| Type | Type of Property Value (unit, string, etc.); |
| Maximum size | If Property is a string, max. length of string, Otherwise, sizeof() attribute; |
| Value | Property's value; |
| State | Property's state: included in or removed from the Property List; and |
| UI Present. Attributes | User Interface Control to use in displaying, Part of Presentation Group, etc., default values. |
| | |
| Method List | List of Entries of a selected set of Methods available on the source class. |
| | |
| Entry: | Each Entry in the Method List includes: |
| | |
| Internal name or ID | Identifies Method; |
| | |
| External name | Name (keyword) shown to user for Method; |
| Procedure name | Script, executable, or other procedural code (If not present the default is the base class registry entry); and |
| State | Method's state: included, removed, or additional. |

The Property Sheet Base Class field is used when determining if two objects are of 'like type'.

It should be realized that the dynamic Property Sheet of this invention is not limited to only the number and type of data fields that are expressly set forth above. For example, other fields that may be used include a Security attributes field for indicating a class of users, and a Data Base Containment field for indicating appropriate data base table and field mapping information.

The Methods which may appear in the Method List field, in the presently preferred embodiment of the invention, are drawn from those stored within the memory 34 of FIG. 1. System defined Methods are described below. Each definition includes the internal name of the Method, a description of the Method's operation, the arguments associated with the Method, and the Class Functions of the Method.

### METHODS:

AddMethod - Adds the method and optional script to the Method List at the position specified.
Method Arguments:
Class Functions:
AddMethod_(method list entry, position)
AddProperty - Adds the Property and optional value to the Property List. The property is not actually (physically) "added", instead its state is changed from removed to included; only the external name and value parts of the entry are changed.
Method Arguments:
Class Functions:
AddProperty_(Property list entry)
DeleteMethod - Physically removes the specified method from the method list.
Method Arguments:
Class Functions:
DeleteMethod_(method internal name or identifier)
GetBaseClass/SetBaseClass - Gets or sets the base class from which the Property Sheet was derived. By changing this attribute the user can define a new base class.
GetUserSubclass/SetUserSubclass - Get or Set the user defined subclass. The default setting on the UserSubclass is the same as the BaseClass. By changing this attribute the user may define a sub-class.
GetUIEntry/SetUIEntry - Gets or Set the attribute controlling the presentation attributes of an individual Property for the User Interface.
GetMethod
Method Arguments:
Class Functions:
GetMethod_(method list entry) - on input only the internal name or identifier need be set. The complete Method List entry is returned.
GetProperty - Retrieves a copy of the specified Property
Method Arguments:
Class Functions:
GetProperty_(Property list entry) - on input only the internal name or identifier need be set. The complete Property List entry is returned.
ListMethods - Returns the list of methods, option to return all or only active (include state). The returned List is composed of Method List entries, one for each Method in the Method List.
Method Arguments:
Class Functions:
ListMethods_(method list, option = active)
ListProperties - Returns the list of properties, option to return all or only active (included state). The returned List is composed of Property List entries, one for each Property in the Property List.
Method Arguments:
Class Functions:
ListProperties_(property list, option = active)
New -
Method Arguments:
Class Functions:
static New (template = NULL) - UI displayed. The destination and name of the new Property Sheet file is not specified until the file is saved.
static New (dst, name, template = NULL) - UI displayed.
Open -
Method Arguments:
Class Functions:
Open() - UI displayed
RemoveMethod - Removes the method from the Method List. Method is not physically removed, instead the state is set to 'removed'.
Method Arguments:
Class Functions:
RemoveMethod_(method internal name or identifier)
RemoveProperty - Removes the specified Property from its list.

The Property is not physically removed, instead the state of the Property is set to 'removed'.
Method Arguments:
Class Functions:
RemoveProperty_(internal name or identifier of Property)
SetMethod - Sets the specified method according to the information in the entry. Only the external name and script can be replaced with this Method.
Method Arguments:
Class Functions:
SetMethod_(method list entry)
SetProperty - Sets the specified Property according to the information in the entry. Only the external name and value of the entry can be set.
Method Arguments:
Class Functions:
SetSourceProperty_(source class entry)
Serialize - To permanent storage
Method Arguments:
Class Functions:
Serialize_()
View -
Method Arguments:
Class Functions:
View() - User Interface is displayed to the user.

The foregoing Method list is exemplary, in that methods may be deleted from this list or others added.

The list of Methods associated with a dynamic Property Sheet functions as a 'mask' that is employed by the DMS 20 in controlling the presentation of the Methods to the user (for example, via a right mouse click, a menu, or a toolbars). What appears to the user on the display screen 14a would be those Methods found in the registry and base class definition for an object, plus those added by a dynamic Property Sheet (or base class). The dynamic Property Sheet also controls the user presentation of Methods and Properties. That is, it effectively masks the list of methods/attributes of an object instance or class.
For example, a 'folder' object has open, print, mail, close, properties, and Property_Sheet Methods in its object registry. A dynamic Property Sheet has removed Property_Sheet and mail methods from the list of methods available to the user on the folder instance, and added both check and process methods which are embodied within user-defined scripts or procedural code. The available methods to the end user would thus be open, print, close, properties, check, and process. This reflects a merger of those methods in the registry, the base class, and those associated with the object instance or class from the dynamic Property Sheet. The newly created dynamic Property sheet for the 'Smart Object' folder (having inherent check and process Methods) could then be dropped on the administrative class table (FIGs. 2A-2C) to form the basis for what is effectively a new user-defined class. The system user or administrator could then set the user defined sub-class attribute of the Property Sheet to construct an 'intelligent folder' sub-class having enhanced properties over the 'folder' base class.

As an example, the 'intelligent folder' sub-class includes a user-provided script program that verifies that all required fields of the folder are completed, and that further verifies that no fields contain values that are out of a pre-determined range of values. If the folder contents are verified, then another user-provided script can drop the folder onto the printer 28, for printing.

The dynamic Property Sheets of this invention facilitate other useful operations. For example, a drop of user-defined script on a Property Sheet adds the script as a Method, while a drop of a script on any object also adds the script as a method. That is, if there is no Property Sheet for the object then a dynamic Property Sheet is generated which includes the dropped script as an Entry within the Method List, in addition to the base class attributes, contents, and base class methods that are associated with the object.

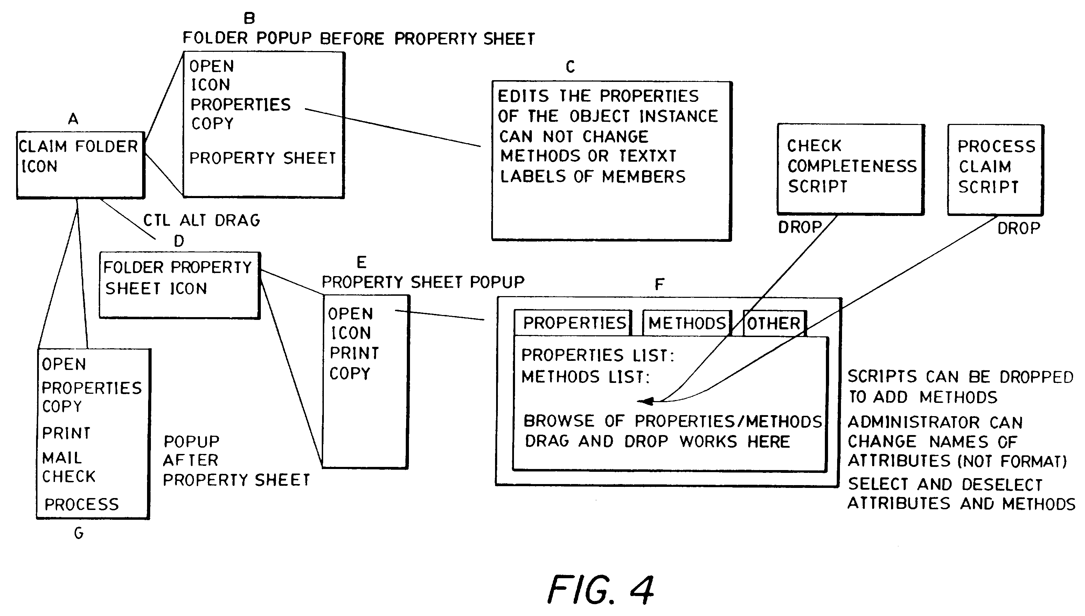

Having described in detail the format of a dynamic Property Sheet, and the Methods that may be included within a dynamic Property Sheet, an example of the use of the dynamic Property Sheets of this invention is now described with reference to FIG. 4.

Reference is now made to FIG. 4 for an exemplary system-administrator interaction with the DMS 20. The administrator employs dynamic Property Sheets to define new classes and sub-classes, and to construct useful user objects which relate to the enterprise work functions. Dynamic Property Sheets are the base mechanism for storing class definitions.

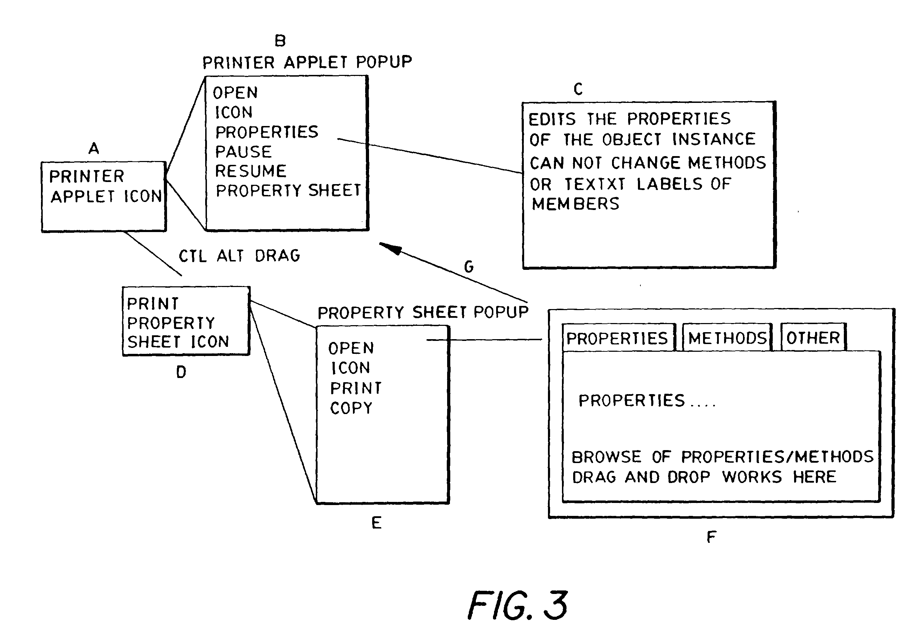

As in the example of FIG. 3, the DMS 20 has cooperated with the user interface 12 to display within the display screen 14a the folder icon 14b (referred to here as a 'Claims Folder' icon and the printer icon 14c. The administrator manipulates the pointing device 18 to position the cursor 14d over the claims folder icon 14b and to select same (Step A). In response, the DMS 20 displays a Claims Folder Popup, and the administrator manipulates the pointing device to select Properties (Step B). The administrator then edits the properties of the claims folder object instance. In this example the administrator is prevented from modifying the methods or text labels of the Claims Folder base class.

Assuming also for this example that the pointing device 18 is a mouse, the administrator then performs a Ctl Alt drag operation from the Folder icon 14b (Step D) to cause the DMS 20 to create a dynamic Property Sheet having all of the now modified properties, and also the base class methods, of the Claims Folder base class. The administrator then performs a single mouse click to bring up the Property Sheet Popup, and a double mouse click to Open the dynamic Property Sheet (Step E). At Step F the administrator adds a Check Completeness Script and a Process Claim Script to the Methods List. The administrator can also add, delete or modify other entries of the Methods List, and can add, delete or modify entries of the Properties List. The modified dynamic Property Sheet can be dropped back onto the Claims Folder icon 14b, thereby causing the DMS 20 to subsequently merge the base properties and methods of the Claims Folder with the properties and methods of the dynamic Property Sheet, as described previously. In this case, for a subsequent instance of the Claims Folder, the newly added script methods Check Completeness and Process Claim would appear to the user to also be a part of the Claim Folder definition (Step G).

The administrator is also enabled to modify the base class or sub-class titles of the dynamic Property Sheet to create a new class or sub-class of the Folder object (for example, 'Self-Checking, Self-Processing Claims Folder' for subsequent selection by the user. Modification of the UI fields also enables a different icon to be displayed for the new object, and enables the new object to have user interface characteristics that differ from the user interface characteristics of the 'Claims Folder' object.

Although the teaching of this invention has been described above primarily in the context of access through the user interface 14, it should be appreciated that the creation and use of the dynamic Property Sheets of this invention can be achieved by a network administrator without the use of the display screen 14a and the pointing device 18. That is, the Property Sheet block 36 can be accessed with a series of instructions from a network (for example, through the COM device 32) to create, modify and revise the Dynamic Property Sheets, and to create new classes and sub-classes of objects, in accordance with the Methods described above.

It should also be realized that the specific fields of the dynamic Property Sheet, and the specific Methods and arguments thereof, that are described above are not to be read in a limiting sense upon the practice of this invention. In like manner, the system 10 of FIG. 1 may have a number of different physical embodiments, other than that specifically illustrated and described. Furthermore, any software event can be used in place of the mouse-specific events described above to initiate and control the dynamic Property Sheet processing. For example, predetermined keys on the keyboard 16 can be used in place of the mouse 18 to position the cursor 14d and provide input to the user interface 12.

## Claims

1. A method for operating a digital data processing system (10) for processing a data object that is selected from a base class of data objects,
comprising the steps of:
in response to an input signal, accessing within a storage means (36) a data structure that is associated with a document-related data object, the data structure being capable of storing a first list having at least one entry that is descriptive of at least one property (35) of the base class of document-related data objects, the data structure further being capable of storing a second list having at least one entry that is descriptive of at least one method (34) that is available to the base class of document-related data objects;
modifying at least one of the first list and the second list by performing at least one of adding, modifying and deleting at least one entry;
storing the data structure having the at least one of the modified first list and the second list within the storage means; and
when the document-related data object is subsequently invoked for use, accessing the data structure and utilizing the document-related data object in accordance with the at least one of the modified first list and second list;
the method further comprising an optional step of merging the data structure with a second data structure associated with the same document-related data object or another object selected from one of a document-related data object and an interface-related data object.

2. The method according to claim 1, wherein the data object is a first data object that is one of a document-related data object and an interface-related data object, and further comprising the steps of:
modifying a data structure that is associated with a second, document-related data object in accordance with the data structure that is associated with the first data object so as to replace any entry within the first list of the data structure of the second object with a corresponding entry from the first list of the data structure of the first object;
storing the modified data structure within the memory means; and
when the second, document-related data object is subsequently invoked for use, accessing the modified data structure and utilizing the second, document-related data object in accordance with the first list of the modified data structure.

3. The method according to claim 1, and further comprising the steps of:
copying the data structure to generate a second data structure having a first list and a second list;
revising the second list of the second data structure to add or delete at least one entry;
storing the second data structure within the memory means in association with the first data structure; and
when the document-related data object is subsequently invoked for action, utilizing the document-related data object in accordance with a merged data structure that represents a combination of the first data structure with the second data structure so as to add to the second list of the first data structure any entry that was added to the second list of the second data structure, and to delete from the second list of the first data structure any entry that was deleted from the second list of the second data structure.

4. The method according to claim 3, and further comprising the steps of:
copying the merged data structure; and
establishing a new base class of objects having characteristics specified by the copy of the merged data structure.

5. The method according to claim 1, and further comprising the steps of:
copying the data structure to generate a second data structure having a first list and a second list;
revising the second data structure by performing at least one of adding, modifying and deleting at least one entry of at least one of the first list and the second list;
merging the second data structure with the first data structure by adding to the first data structure any entry that was added to the second data structure, and by deleting from the first data structure any entry that was deleted from the second data structure;
copying the merged data structure; and
establishing a new base class of objects having characteristics specified by the copy of the merged data structure.

6. The method according to claim 1, wherein the first list is a Property list and the second list is a Method list; wherein
each entry of the Property list includes,
at least one Name field that identifies the Property specified by the entry; a Property Value field; a Type field that identifies a type of the Property Value; a field for specifying a Maximum Size of the Property Value; a State field for indicating if the Property list entry is included or removed from the data structure; and a field for specifying a User Interface control function; and
wherein each entry of the Method list includes, at least one Name field that identifies the Method specified by the entry; a State field for indicating if the Method list entry is included or removed from the data structure; and a Procedure Name field for identifying a program that is executed to accomplish the Method identified by the entry.

7. The method according to claim 6, wherein the step of merging includes the steps of:
for an entry within the Property list of the data structure that does not have a corresponding entry with the same Name field within the Property list of the second data structure, adding the entry of the Property list of the second data structure; and
for an entry within the Property list of the data structure that does have a corresponding entry with the same Name field within the Property list of the second data structure, and for which the State field indicates that the entry is removed from the Property list of the data structure, setting the State field of the corresponding entry of the Property list of the second data structure to indicate that the corresponding entry is removed from the Property list of the second data structure.

8. The method according to claim 6, wherein the step of merging includes the steps of:
for an entry within the Method list of the data structure that does not have a corresponding entry with the same Name field within the Method list of the second data structure, adding the entry to the Method list of the second data structure; and
for an entry within the Method list of the data structure that does have a corresponding entry with the same Name field within the Method list of the second data structure, and for which the State field indicates that the entry is removed from the Method list of the data structure, setting the State field of the corresponding entry of the Method list of the second data structure to indicate that the corresponding entry is removed from the Method list of the second data structure.

9. The method according to claim 6, wherein the data structure is further comprised of a Base Class name field, and wherein the method further includes the steps of:
copying the data structure as a second data structure; and
modifying the Base Class name field to establish a new Base Class having characteristics specified by the second data structure.

10. The method according to claim 6, wherein the data structure is further comprised of a Base Sub-Class name field, and wherein the method further includes the steps of:
copying the data structure as a second data structure; and
modifying the Base Sub-Class name field to establish a new Base Sub-Class having characteristics specified by the second data structure.

11. A data processing system (10) comprising:
means for modifying one or more characteristics of a document-related data object that is selected from a Base Class of document-related data objects;
said modifying means comprising:
means (36), responsive to an input signal, for accessing within a storage means (36) a data structure that is associated with the document-related data object, the data structure being capable of storing a Property list having at least one entry that is descriptive of at least one property (35) of the base class of document-related data objects, the data structure further being capable of storing a Method list having at least one entry that is descriptive of at least one method (34) that is available to the base class of document-related data objects;
means (12, 36) for modifying the data structure to perform at least one of adding, modifying, and deleting at least one entry;
means (12, 36) for storing the modified data structure within the storage means; and
when the object is subsequently invoked for use, means (20) for utilizing the document-related data object in accordance with the modified data structure; wherein
each entry of the Property list includes,
at least one Name field that identifies the Property specified by the entry; a Property Value field; a Type field that identifies a type of the Property Value; a field for specifying a Maximum Size of the Property Value; a State field for indicating if the Property list entry is included or removed from the data structure; and a field for specifying a User Interface control function; and wherein each entry of the Method list includes,
at least one Name field that identifies the Method specified by the entry; a State field for indicating if the Method list entry is included or removed from the data structure; and a Procedure Name field for identifying a program that is executed to accomplish the Method identified by the entry;
said data processing means further comprising means for merging the data structure with a second data structure associated with the same document-related data object or another object selected from one a document-related data object and an interface-related object.

12. The data processing system according to claim 11, wherein the data structure is further comprised of a Name field; a Base Class name field; and a Sub-Class name field.

13. The data processing system according to claim 11, wherein said merging means comprises:
for an entry within the Property list of the data structure that does not have a corresponding entry with the same Name field within the Property list of the second data structure, means for adding the entry to the Property list of the second data structure; and
for an entry within the Property list of the data structure that does have a corresponding entry with the same Name field within the Property list of the second data structure, and for which the State field indicates that the entry is removed from the Property list of the data structure, means for setting the State field of the corresponding entry of the Property list of the second data structure to indicate that the corresponding entry is removed from the Property list of the second data structure.

14. The data processing system according to claim 11, wherein said merging means comprises:
for an entry within the Method list of the data structure that does not have a corresponding entry with the same Name field within the Method list of the second data structure, means for adding the entry to the Method list of the second data structure; and
for an entry within the Method list of the data structure that does have a corresponding entry with the same Name field within the Method list of the second data structure, and for which the State field indicates that the entry is removed from the Method list of the data structure, means for setting the State field of the corresponding entry of the Method list of the second data structure to indicate that the corresponding entry is removed from the Method list of the second data structure.

15. The data processing system according to claim 11 wherein the data structure is further comprised of a Base Class name field, and wherein said data processing system further includes:
means for copying the data structure as a second data structure; and
means for modifying the Base Class name field to establish a new Base Class having characteristics specified by the second data structure.

16. The data processing system according to claim 11, wherein the data structure is further comprised of a Base Sub-Class name field, and wherein said data processing system further includes:
means for copying the data structure as a second data structure; and
means for modifying the Base Sub-Class name field to establish a new Base Sub-Class having characteristics specified by the second data structure.

## Patentansprüche

1. Verfahren zum Betreiben eines digitalen Datenverarbeitungssystems (10) zur Verarbeitung eines Datenobjektes, das aus einer Grundklasse von Datenobjekten ausgewählt ist, mit den Verfahrensschritten:
von einem Eingangssignal abhängiges Zugreifen in einer Speichervorrichtung (36) auf eine Datenstruktur, die einem dokument-bezogenen Datenobjekt zugeordnet ist, wobei die Datenstruktur eine erste Liste zu speichern vermag, die wenigstens einen Eintrag aufweist, der wenigstens eine Eigenschaft (35) der Grundklasse dokument-bezogener Datenobjekte beschreibt, ferner eine zweite Liste zu speichern vermag, die wenigstens einen Eintrag aufweist, der wenigstens ein Verfahren (34) beschreibt, das für die Grundklasse dokument-bezogener Datenobjekte verfügbar ist,
Modifizieren wenigstens einer Liste aus der Gruppe mit erster und zweiter Liste durch Ausführen wenigstens einer der Operationen Hinzufügen, Ändern und Entfernen an wenigstens einem Eintrag,
Speichern der Datenstruktur, welche die wenigstens eine Liste aus der Gruppe mit modifizierter erster und zweiter Liste aufweist, in der Speichervorrichtung, und
beim nachfolgenden Aufrufen des dokument-bezogenen Datenobjektes zur Benutzung Zugreifen auf die Datenstruktur und Benutzen des dokument-bezogenen Datenobjektes in Übereinstimmung mit der wenigstens einen Liste aus der Gruppe mit modifizierter erster und zweiter Liste,
wobei das Verfahren ferner einen wahlweisen Verfahrensschritt des Mischens der Datenstruktur mit einer zweiten Datenstruktur aufweist, die mit demselben dokument-bezogenen Datenobjekt oder einem anderen Objekt verbunden ist, das aus einem Datenobjekt aus der Gruppe mit einem dokument-bezogenen Datenobjekt und einem schnittstellen-bezogenen Datenobjekt gewählt ist.

2. Verfahren nach Anspruch 1, bei dem das Datenobjekt ein erstes Datenobjekt ist, das ein Datenobjekt aus der Gruppe mit einem dokument-bezogenen Datenobjekt und einem schnittstellen-bezogenen Datenobjekt ist, und ferner mit den Verfahrensschritten:
Modifizieren einer Datenstruktur, die in Übereinstimmung mit der dem ersten Datenobjekt zugeordneten Datenstruktur einem zweiten, dokument-bezogenen Datenobjekt zugeordnet ist, um einen beliebigen Eintrag in der ersten Liste der Datenstruktur des zweiten Objektes durch einen entsprechenden Eintrag aus der ersten Liste der Datenstruktur des ersten Objektes zu ersetzen,
Speichern der modifizierten Datenstruktur in der Speichervorrichtung, und
beim nachfolgenden Aufruf des zweiten, dokument-bezogenen Datenobjektes zur Benutzung Zugreifen auf die modifizierte Datenstruktur und Benutzen des zweiten, dokument-bezogenen Datenobjektes in Übereinstimmung mit der ersten Liste der modifizierten Datenstruktur.

3. Verfahren nach Anspruch 1, ferner mit den Verfahrensschritten:
Kopieren der Datenstruktur, um eine zweite Datenstruktur zu erzeugen, welche eine erste Liste und eine zweite Liste aufweist,
Überarbeiten der zweiten Liste der zweiten Datenstruktur, um wenigstens einen Eintrag hinzuzufügen oder zu entfernen,
Speichern der zweiten Datenstruktur in der Speichervorrichtung in Verbindung mit der ersten Datenstruktur, und
beim nachfolgendem Aufruf des dokument-bezogenen Datenobjektes Benutzen des dokument-bezogenen Datenobjektes in Übereinstimmung mit einer gemischten Datenstruktur, die eine Kombination der ersten Datenstruktur mit der zweiten Datenstruktur darstellt, um zur zweiten Liste der ersten Datenstruktur einen beliebigen Eintrag hinzuzufügen, der zur zweiten Liste der zweiten Datenstruktur hinzugefügt worden ist, und um in der zweiten Liste der ersten Datenstruktur einen beliebigen Eintrag zu entfernen, der aus der zweiten Liste der zweiten Datenstruktur entfernt worden ist.

4. Verfahren nach Anspruch 3, ferner mit den Verfahrensschritten:
Kopieren der gemischten Datenstruktur, und
Erstellen einer neuen Grundklasse von Objekten, die Eigenschaften aufweisen, welche durch die Kopie der gemischten Datenstruktur angegeben sind.

5. Verfahren nach Anspruch 1, ferner mit den Verfahrensschritten:
Kopieren der Datenstruktur, um eine zweite Datenstruktur mit einer ersten Liste und einer zweiten Liste zu erzeugen,
Überarbeiten der zweiten Datenstruktur durch Ausführen wenigstens einer der Operationen Hinzufügen, Ändern und Entfernen an wenigstens einem Eintrag aus wenigstens einer Liste aus der Gruppe mit erster und zweiter Liste,
Mischen der zweiten Datenstruktur mit der ersten Datenstruktur durch Hinzufügen zur ersten Datenstruktur eines beliebigen Eintrags, der zur zweiten Datenstruktur hinzugefügt worden ist, und durch Entfernen aus der ersten Datenstruktur eines beliebigen Eintrags, der aus der zweiten Datenstruktur entfernt worden ist,
Kopieren der gemischten Datenstruktur, und
Erstellen einer neuen Grundklasse von Objekten, die Eigenschaften aufweisen, welche durch die Kopie der gemischten Datenstruktur angegeben sind.

6. Verfahren nach Anspruch 1, bei dem die erste Liste eine Eigenschaftsliste und die zweite Liste eine Verfahrensliste ist, wobei
jeder Eintrag der Eigenschaftsliste enthält:
wenigstens ein Namens-Feld, das die durch den Eintrag angegebene Eigenschaft kennzeichnet, ein Eigenschaftswert-Feld, ein Typ-Feld, das einen Typ des Eigenschaftswertes kennzeichnet, ein Feld zum Angeben einer Maximalen Größe des Eigenschaftswertes, ein Zustands-Feld zur Angabe, ob der Eintrag der Eigenschaftsliste in der Datenstruktur enthalten ist oder aus ihr entfernt worden ist, und ein Feld zum Angeben einer Benutzerschnittstellen-Steuerfunktion, und
wobei jeder Eintrag der Verfahrensliste enthält:
wenigstens ein Namens-Feld, welches das durch den Eintrag angegebene Verfahren kennzeichnet, ein Zustands-Feld zur Angabe, ob der Eintrag der Verfahrensliste in der Datenstruktur enthalten ist oder aus ihr entfernt worden ist, und ein Prozedurnamens-Feld zum Kennzeichnen eines Programmes, das zur Durchführung des durch den Eintrag angegebenen Verfahrens ausgeführt wird.

7. Verfahren nach Anspruch 6, bei dem der Verfahrensschritt des Mischens die Schritte enthält:
bei einem Eintrag in der Eigenschaftsliste der Datenstruktur, der keinen Eintrag mit demselben Namens-Feld in der Eigenschaftsliste der zweiten Datenstruktur entspricht, Hinzufügen des Eintrages der Eigenschaftsliste der zweiten Datenstruktur, und
bei einem Eintrag in der Eigenschaftsliste der Datenstruktur, dem ein Eintrag mit demselben Namens-Feld in der Eigenschaftsliste der zweiten Datenstruktur entspricht und bei dem das Zustands-Feld angibt, daß der Eintrag aus der Eigenschaftsliste der Datenstruktur entfernt ist, Setzen des Zustands-Feldes des entsprechenden Eintrages der Eigenschaftsliste der zweiten Datenstruktur so, daß es angibt, daß der entsprechende Eintrag aus der Eigenschaftsliste der zweiten Datenstruktur entfernt ist.

8. Verfahren nach Anspruch 6, bei dem der Verfahrensschritt des Mischens die Schritte enthält:
bei einem Eintrag in der Verfahrensliste der Datenstruktur, der einen entsprechenden Eintrag mit demselben Namens-Feld in der Verfahrensliste der zweiten Datenstruktur nicht hat, Hinzufügen des Eintrages zur Verfahrensliste der zweiten Datenstruktur, und
bei einem Eintrag in der Verfahrensliste der Datenstruktur, der einen entsprechenden Eintrag mit demselben Namens-Feld in der Verfahrensliste der zweiten Datenstruktur hat und bei dem das Zustands-Feld angibt, daß der Eintrag aus der Verfahrensliste der Datenstruktur entfernt ist, Setzen des Zustands-Feldes des entsprechenden Eintrags der Verfahrensliste der zweiten Datenstruktur so, daß es angibt, daß der entsprechende Eintrag aus der Verfahrens liste der zweiten Datenstruktur entfernt ist.

9. Verfahren nach Anspruch 6, bei dem die Datenstruktur ferner von einem Grundklassen-Namensfeld gebildet ist, und das Verfahren ferner die Verfahrensschritte enthält:
Kopieren der Datenstruktur als zweite Datenstruktur, und
Modifizieren des Grundklassen-Namensfeldes derart, daß eine neue Grundklasse erstellt wird, die Eigenschaften aufweist, welche durch die zweite Datenstruktur angegeben sind.

10. Verfahren nach Anspruch 6, bei dem die Datenstruktur ferner von einem Grundunterklassen-Namensfeld gebildet ist, und das Verfahren ferner die Verfahrensschritte enthält:
Kopieren der Datenstruktur als zweite Datenstruktur, und
Modifizieren des Grundunterklassen-Namensfeldes, derart, daß ein neue Grundunterklasse erstellt wird, die Eigenschaften aufweist, welche durch die zweite Datenstruktur angegeben sind.

11. Datenverarbeitungssystem (10), mit
einer Einrichtung zum Modifizieren einer oder mehrerer Eigenschaften eines dokument-bezogenen Datenobjektes, das aus einer Grundklasse von dokument-bezogenen Datenobjekten ausgewählt ist,
wobei die genannte Modifiziereinrichtung umfaßt:
eine auf ein Eingangssignal ansprechende Einrichtung (36) zum Zugreifen in einer Speichervorrichtung (36) auf eine Datenstruktur, die dem dokument-bezogenen Datenobjekt zugeordnet ist, wobei die Datenstruktur eine Eigenschaftsliste zu speichern vermag, die wenigstens einen Eintrag aufweist, der wenigstens eine Eigenschaft (35) der Grundklasse dokument-bezogener Datenobjekte beschreibt, die Datenstruktur ferner eine Verfahrens liste zu speichern vermag, die wenigstens einen Eintrag aufweist, der wenigstens ein Verfahren (34) beschreibt, das für die Grundklasse dokument-bezogener Datenobjekte verfügbar ist,
eine Einrichtung (12, 36) zum Modifizieren der Datenstruktur zur Ausführung wenigstens einer der Operationen Hinzufügen, Ändern und Entfernen an wenigstens einem Eintrag,
eine Einrichtung (12, 36) zum Speichern der modifizierten Datenstruktur in der Speichervorrichtung, und
beim späteren Aufruf des Objektes eine Einrichtung (20) zur Benutzung des dokument-bezogenen Datenobjektes in Übereinstimmung mit der modifizierten Datenstruktur, wobei
jeder Eintrag der Eigenschaftsliste enthält:
wenigstens ein Namens-Feld, das die durch den Eintrag angegebene Eigenschaft kennzeichnet, ein Eigenschaftswert-Feld, ein Typ-Feld, das einen Typ des Eigenschaftswertes kennzeichnet, ein Feld zum Angeben einer Maximalen Größe des Eigenschaftswertes, ein Zustands-Feld zur Angabe, ob der Eintrag der Eigenschaftsliste in der Datenstruktur enthalten ist oder aus ihr entfernt worden ist, und ein Feld zum Angeben einer Benutzerschnittstellen-Steuerfunktion, und
wobei jeder Eintrag der Verfahrensliste enthält:
wenigstens ein Namens-Feld, welches das durch den Eintrag angegebene Verfahren kennzeichnet, ein Zustands-Feld zur Angabe, ob der Eintrag der Verfahrensliste in der Datenstruktur enthalten ist oder aus ihr entfernt worden ist, und ein Prozedurnamens-Feld zum Kennzeichnen eines Programmes, das zur Durchführung des durch den Eintrag angegebenen Verfahrens ausgeführt wird
wobei die genannte Datenverarbeitungs-Vorrichtung ferner eine Einrichtung zum Mischen der Datenstruktur mit einer zweiten Datenstruktur umfaßt, die demselben dokument-bezogenen Datenobjekt oder einem anderen Datenobjekt zugeordnet ist, das aus einer Gruppe mit einem dokument-bezogenen Datenobjekt und einem schnittstellen-bezogenen Datenobjekt ausgewählt ist.

12. Datenverarbeitungssystem nach Anspruch 11,
bei dem die Datenstruktur ferner von einem Namens-Feld, einem Grundklassen-Namensfeld und einem Unterklassen-Namensfeld gebildet ist.

13. Datenverarbeitungssystem nach Anspruch 11, bei dem die Misch-Einrichtung umfaßt:
bei einem Eintrag in der Eigenschaftsliste der Datenstruktur, dem kein Eintrag mit demselben Namens-Feld in der Eigenschaftsliste der zweiten Datenstruktur entspricht, eine Einrichtung zum Hinzufügen des Eintrages zur Eigenschaftsliste der zweiten Datenstruktur, und
bei einem Eintrag in der Eigenschaftsliste der Datenstruktur, dem ein Eintrag mit demselben Namens-Feld in der Eigenschaftsliste der zweiten Datenstruktur entspricht und bei dem das Zustands-Feld angibt, daß der Eintrag aus der Eigenschaftsliste der Datenstruktur entfernt ist, eine Einrichtung zum Setzen des Zustands-Feldes des entsprechenden Eintrages der Eigenschaftsliste der zweiten Datenstruktur so, daß es angibt, daß der entsprechende Eintrag aus der Eigenschaftsliste der zweiten Datenstruktur entfernt ist.

14. Datenverarbeitungssystem nach Anspruch 11, bei dem die Misch-Einrichtung umfaßt:
bei einem Eintrag in der Verfahrensliste der Datenstruktur, dem kein entsprechenden Eintrag mit demselben Namens-Feld in der Verfahrensliste der zweiten Datenstruktur entspricht, eine Einrichtung zum Hinzufügen des Eintrages zur Verfahrens liste der zweiten Datenstruktur, und
bei einem Eintrag in der Verfahrens liste der Datenstruktur, dem ein Eintrag mit demselben Namens-Feld in der Verfahrens liste der zweiten Datenstruktur entspricht und bei dem das Zustands-Feld angibt, daß der Eintrag aus der Verfahrensliste der Datenstruktur entfernt ist, eine Einrichtung zum Setzen des Zustands-Feldes des entsprechenden Eintrages der Verfahrens liste der zweiten Datenstruktur so, daß es angibt, daß der entsprechende Eintrag aus der Verfahrensliste der zweiten Datenstruktur entfernt ist.

15. Datenverarbeitungssystem nach Anspruch 11, bei dem die Datenstruktur ferner von einem Grundklassen-Namensfeld gebildet ist, und bei dem das genannte Datenverarbeitungssystem ferner umfaßt:
eine Einrichtung zum Kopieren der Datenstruktur als zweite Datenstruktur, und
eine Einrichtung zum Modifizieren des Grundklassen-Namensfeldes derart, daß eine neue Grundklasse erstellt wird, die Eigenschaften aufweist, welche durch die zweite Datenstruktur -angegeben sind.

16. Datenverarbeitungssystem nach Anspruch 11, bei dem die Datenstruktur ferner von einem Grundunterklassen-Namensfeld gebildet ist und das genannte Datenverarbeitungssystem ferner umfaßt:
eine Einrichtung zum Kopieren der Datenstruktur als zweite Datenstruktur, und
eine Einrichtung zum Modifizieren des Grundunterklassen-Namensfeldes, derart, daß ein neue Grundunterklasse erstellt wird, die Eigenschaften aufweist, welche durch die zweite Datenstruktur angegeben sind.

## Revendications

1. Procédé pour exploiter un système de traitement de données numériques (10) pour traiter un objet de données qui est choisi dans une classe de base d'objets de données, comprenant les opérations consistant à :
en réponse à un signal d'entrée, accéder dans un moyen de mémoire (36) à une structure de données qui est associée à un objet de données ayant trait à un document, la structure de données étant en mesure d'enregistrer une première liste possédant au moins un élément qui est descriptif d'au moins une propriété (35) de la classe de base d'objets de données ayant trait au document, la structure de données étant de plus en mesure d'enregistrer une deuxième liste possédant au moins un élément qui est descriptif d'au moins un procédé (34) qui est disponible pour la classe de base d'objets de données ayant trait au document;
modifier au moins l'une de la première liste et de la deuxième liste en exécutant au moins l'une des opérations consistant à ajouter, modifier et supprimer au moins un élément;
enregistrer la structure de données possédant ladite au moins une de la première liste et de la deuxième liste modifiée dans le moyen de mémoire; et
lorsque l'objet de données ayant trait au document est ultérieurement appelé pour être utilisé, accéder à la structure de données et utiliser l'objet de données ayant trait au document selon ladite au moins une de la première liste et de la deuxième liste modifiée;
le procédé comprenant en outre une opération facultative consistant à fusionner la structure de données avec une deuxième structure de données associée au même objet de données ayant trait au document ou à un autre objet choisi parmi un objet de données ayant trait au document et un objet de données ayant trait à l'interface.

2. Procédé selon la revendication 1, dans lequel l'objet de données est un premier objet de données qui est l'un d'un objet de données ayant trait au document et d'un objet de données ayant trait à l'interface, et comprenant de plus les opérations consistant à :
modifier une structure de données qui est associée à un deuxième objet de données ayant trait au document selon la structure de données qui est associée au premier objet de données de façon à remplacer tout élément dans la première liste de la structure de données du deuxième objet par un élément correspondant de la première liste de la structure de données du premier objet;
enregistrer la structure de données modifiée dans le moyen de mémoire; et
lorsque le deuxième objet de données ayant trait au document est ultérieurement appelé pour être utilisé, accéder à la structure de données modifiée et utiliser le deuxième objet de données ayant trait au document selon la première liste de la structure de données modifiée.

3. Procédé selon la revendication 1 et comprenant de plus les opérations consistant à :
copier la structure de données pour générer une deuxième structure de données possédant une première liste et une deuxième liste;
mettre à jour la deuxième liste de la deuxième structure de données pour ajouter ou supprimer au moins un élément;
enregistrer la deuxième structure de données dans le moyen de mémoire en association avec la première structure de données; et
lorsque l'objet de données ayant trait au document est ultérieurement appelé pour une action, utiliser l'objet de données ayant trait au document selon une structure de données fusionnée qui représente une combinaison de la première structure de données avec la deuxième structure de données de façon à ajouter à la deuxième liste de la première structure de données tout élément qui a été ajouté à la deuxième liste de la deuxième structure de données, et à supprimer de la deuxième liste de la première structure de données tout élément qui a été supprimé de la deuxième liste de la deuxième structure de données.

4. Procédé selon la revendication 3 et comprenant de plus les opérations consistant à :
copier la structure de données fusionnée; et
établir une nouvelle classe de base d'objets ayant des caractéristiques spécifiées par la copie de la structure de données fusionnée.

5. Procédé selon la revendication 1 et comprenant de plus les opérations consistant à :
copier la structure de données pour générer une deuxième structure de données possédant une première liste et une deuxième liste;
mettre à jour la deuxième structure de données en exécutant au moins une des opérations consistant à ajouter, modifier et supprimer au moins un élément d'au moins une de la première liste et de la deuxième liste;
fusionner la deuxième structure de données avec la première structure de données en ajoutant à la première structure de données tout élément qui a été ajouté à la deuxième structure de données, et en supprimant de la première structure de données tout élément qui a été supprimé de la deuxième structure de données;
copier la structure de données fusionnée; et
établir une nouvelle classe de base d'objets ayant des caractéristiques spécifiées par la copie de la structure de données fusionnée.

6. Procédé selon la revendication 1, dans lequel la première liste est une liste de Propriété et la deuxième liste est une liste de Procédé; dans lequel
chaque élément de la liste de Propriété comprend,
au moins une zone de Nom qui identifie la Propriété spécifiée par l'élément; une zone de Valeur de Propriété; une zone de Type qui identifie un type de Valeur de Propriété; une zone pour indiquer une Taille Maximum de la Valeur de Propriété; une zone d'Etat pour indiquer si l'élément de la liste de Propriété est inclus dans ou retiré de la structure de données; et une zone pour spécifier une fonction de commande d'Interface Utilisateur; et
dans lequel chaque élément de la liste de Procédé comprend au moins une zone de Nom qui identifie le Procédé spécifié par l'élément; une zone d'Etat pour indiquer si l'élément de la liste de Procédé est inclus dans ou retiré de la structure de données; et une zone de Nom de Procédure pour identifier un programme qui est exécuté pour accomplir le Procédé identifié par l'élément.

7. Procédé selon la revendication 6, dans lequel l'opération consistant à fusionner comprend les opérations consistant à :
pour un élément dans la liste de Propriété de la structure de données qui n'a pas d'élément correspondant avec la même zone de Nom dans la liste de Propriété de la deuxième structure de données, ajouter l'élément de la liste de Propriété de la deuxième structure de données; et
pour un élément dans la liste de Propriété de la structure de données qui a un élément correspondant avec la même zone de Nom dans la liste de Propriété de la deuxième structure de données, et pour lequel la zone d'Etat indique que l'élément est retiré de la liste de Propriété de la structure de données, mettre à un la zone d'Etat de l'élément correspondant de la liste de Propriété de la deuxième structure de données pour indiquer que l'élément correspondant est retiré de la liste de Propriété de la deuxième structure de données.

8. Procédé selon la revendication 6, dans lequel l'opération consistant à fusionner comprend les opérations consistant à :
pour un élément dans la liste de Procédé de la structure de données qui n'a pas d'élément correspondant avec la même zone de Nom dans la liste de Procédé de la deuxième structure de données, ajouter l'élément à la liste de Procédé de la deuxième structure de données; et
pour un élément dans la liste de Procédé de la structure de données qui a un élément correspondant avec la même zone de Nom dans la liste de Procédé de la deuxième structure de données, et pour lequel la zone d'Etat indique que l'élément est retiré de la liste de Procédé de la structure de données, mettre à un la zone d'Etat de l'élément correspondant de la liste de Procédé de la deuxième structure de données pour indiquer que l'élément correspondant est retiré de la liste de Procédé de la deuxième structure de données.

9. Procédé selon la revendication 6, dans lequel la structure de données est formée de plus d'une zone de nom de Classe de Base, et dans lequel le procédé comprend de plus les opérations consistant à :
copier la structure de données comme deuxième structure de données; et
modifier la zone de nom de Classe de Base pour établir une nouvelle Classe de Base ayant des caractéristiques spécifiées par la deuxième structure de données.

10. Procédé selon la revendication 6, dans lequel la structure de données est formée de plus d'une zone de nom de Sous-Classe de Base, et dans lequel le procédé comprend de plus les opérations consistant à :
copier la structure de données comme deuxième structure de données; et
modifier la zone de nom de Sous-Classe de Base pour établir une nouvelle Sous-Classe de Base ayant des caractéristiques spécifiées par la deuxième structure de données.

11. Système de traitement de données (10) comprenant :
un moyen pour modifier une ou plusieurs caractéristiques d'un objet de données ayant trait à un document qui est choisi parmi une Classe de Base d'objets de données ayant trait au document;
ledit moyen pour modifier comprenant :
un moyen (36), sensible à un signal d'entrée, pour accéder dans un moyen de mémoire (36) à une structure de données qui est associée à l'objet de données ayant trait au document, la structure de données étant en mesure d'enregistrer une liste de Propriété possédant au moins un élément qui est descriptif d'au moins une propriété (35) de la classe de base des objets de données ayant trait au document, la structure de données étant de plus en mesure d'enregistrer une liste de Procédé possédant au moins un élément qui est descriptif d'au moins un procédé (34) qui est disponible pour la classe de base des objets de données ayant trait au document;
un moyen (12, 36) pour modifier la structure de données pour exécuter au moins une des opérations consistant à ajouter, modifier, et supprimer au moins un élément;
un moyen (12, 36) pour enregistrer la structure de données modifiée dans le moyen de mémoire; et
lorsque l'objet est ultérieurement appelé pour être utilisé, un moyen (20) pour utiliser l'objet de données ayant trait au document selon la structure de données modifiée; dans lequel
chaque élément de la liste de Propriété comprend
au moins une zone de Nom qui identifie la Propriété spécifiée par l'élément; une zone de Valeur de Propriété; une zone de Type qui identifie un type de la Valeur de Propriété; une zone pour indiquer une Taille Maximum de la Valeur de Propriété; une zone d'Etat pour indiquer si l'élément de la liste de Propriété est inclus dans ou retiré de la structure de données; et une zone pour indiquer une fonction de commande d'Interface Utilisateur; et dans lequel chaque élément de la liste de Procédé comprend
au moins une zone de Nom qui identifie le Procédé spécifié par l'élément; une zone d'Etat pour indiquer si l'élément de la liste de Procédé est inclus dans ou retiré de la structure de données; et une zone de Nom de Procédure pour identifier un programme qui est exécuté pour accomplir le Procédé spécifié par l'élément;
ledit moyen de traitement de données comprenant de plus un moyen pour fusionner la structure de données avec une deuxième structure de données associée au même objet de données ayant trait au document ou à un objet différent choisi parmi un objet de données ayant trait au document et un objet ayant trait à l'interface.

12. Système de traitement de données selon la revendication 11, dans lequel la structure de données est formée de plus d'une zone de Nom; d'une zone de nom de Classe de Base; et d'une zone de nom de Sous-Classe.

13. Système de traitement de données selon la revendication 11, dans lequel ledit moyen pour fusionner comprend :
pour un élément dans la liste de Propriété de la structure de données qui n'a pas d'élément correspondant avec la même zone de Nom dans la liste de Propriété de la deuxième structure de données, un moyen pour ajouter l'élément à la liste de Propriété de la deuxième structure de données; et
pour un élément dans la liste de Propriété de la structure de données qui a un élément correspondant avec la même zone de Nom dans la liste de Propriété de la deuxième structure de données, et pour lequel la zone d'Etat indique que l'élément est retiré de la liste de Propriété de la structure de données, un moyen pour mettre à un la zone d'Etat de l'élément correspondant de la liste de Propriété de la deuxième structure de données pour indiquer que l'élément correspondant est retiré de la liste de Propriété de la deuxième structure de données.

14. Système de traitement de données selon la revendication 11, dans lequel ledit moyen pour fusionner comprend :
pour un élément dans la liste de Procédé de la structure de données qui n'a pas d'élément correspondant avec la même zone de Nom dans la liste de Procédé de la deuxième structure de données, un moyen pour ajouter l'élément à la liste de Procédé de la deuxième structure de données; et
pour un élément dans la liste de Procédé de la structure de données qui a un élément correspondant avec la même zone de Nom dans la liste de Procédé de la deuxième structure de données, et pour lequel la zone d'Etat indique que l'élément est retiré de la liste de Procédé de la structure de données, un moyen pour mettre à un la zone d'Etat de l'élément correspondant de la liste de Procédé de la deuxième structure de données pour indiquer que l'élément correspondant est retiré de la liste de Procédé de la deuxième structure de données.

15. Système de traitement de données selon la revendication 11 dans lequel la structure de données est formée de plus d'une zone de nom de Classe de Base, et dans lequel ledit système de traitement de données comprend de plus :
un moyen pour copier la structure de données comme deuxième structure de données; et
un moyen pour modifier la zone de nom de Classe de Base pour établir une nouvelle Classe de Base ayant des caractéristiques spécifiées par la deuxième structure de données.

16. Système de traitement de données selon la revendication 11, dans lequel la structure de données est formée de plus d'une zone de nom de Sous-Classe de Base, et dans lequel ledit système de traitement de données comprend de plus :
un moyen pour copier la structure de données comme deuxième structure de données; et
un moyen pour modifier la zone de nom de Sous-Classe de Base pour établir une nouvelle Sous-Classe de Base ayant des caractéristiques spécifiées par la deuxième structure de données.
